(19)

**Europäisches Patentamt**

**European Patent Office**

**Office européen des brevets**

(11) **EP 4 589 482 A1**

(12) **EUROPEAN PATENT APPLICATION**

(43) Date of publication:
**23.07.2025 Bulletin 2025/30**

(21) Application number: **24223509.1**

(22) Date of filing: **27.12.2024**

(51) International Patent Classification (IPC):
***G06N 3/096*** *(2023.01)*

(52) Cooperative Patent Classification (CPC):
**G06N 3/096**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.01.2024  IT 202400000861**

(71) Applicant: **STMicroelectronics International N.V.
1228 Plan-les-Ouates, Geneva (CH)**

(72) Inventors:
- **CASTAGNOLO, Giulia**
  **I-95036 Randazzo (Catania) (IT)**
- **COFFA, Salvatore**
  **I-20147 Milano (IT)**
- **PINO, Carmelo**
  **I-95121 Catania (IT)**
- **RUNDO, Francesco**
  **I-95030 Gravina di Catania (Catania) (IT)**

(74) Representative: **Buzzi, Notaro & Antonielli d'Oulx
S.p.A.
Corso Vittorio Emanuele II, 6
10123 Torino (IT)**

(54) **ARTIFICIAL NEURAL NETWORK PROCESSING METHODS AND SYSTEMS**

(57)     A method, comprising: providing a first artificial neural network, ANN processing stage (20, 20T) comprising a first set of ANN processing layers (22, 23, 24, 26, 28), and providing a second ANN processing stage (30, 30') comprising a second set of ANN processing layers (32, 35, 38) having a set of processing layer parameters (Ws, Ps) comprising at least one set of ANN processing weights ($W_s$). The number of processing layers in the first set of ANN processing layers (22, 23, 24, 26, 28) is greater than the number of processing layers in the second set of ANN processing layers (32, 35, 38). The method further comprises: applying first ANN processing to at least one input dataset (TD; UD) via the first ANN processing stage (20; 20T), producing a first set of output values ($z^{(T)}$) as a result; applying second ANN processing to said at least one input dataset (TD; UD) via the second ANN processing stage (30; 30'), producing a second set of output values as a result ($z^{(S)}$); computing (40) a first loss value ($L_D$) based on the first set of output values ($z^{(T)}$) and on the second set of output values ($z^{(S)}$); computing (42) a second loss value ($L_{CE}$) based on the second set of output values ($z^{(S)}$); computing (44) a total loss (L) based on the first loss value ($L_D$) and of the second loss value ($L_{CE}$), and adjusting (46) the values of the processing layer parameters in the set of processing layer parameters (Ws, Ps) of the second ANN processing stage (30, 30') based on the total loss value (L).

FIG. 4

EP 4 589 482 A1

**Description**

Technical field

The description relates to an artificial neural network processing method and system.
One or more embodiments may relate to a processing device, such as an edge computing processing device, configured to perform neural network processing operations.

Background

Complex artificial neural network processing models (currently denoted as "backbone" or "machine learning") may involve computational and/or data storage resources exceeding the capabilities of edge processing devices (such as microcontrollers, for instance).
One of the issues in adapting large machine learning models and applications to edge computing is the limited computational resources of the latter.
Existing approaches to solve the issue involve attempts at "distillating" (or compressing) the knowledge obtained from large models into smaller models whose computational use is reduced.
For instance, existing approaches are discussed in the following documents:

Hinton, G.E., Vinyals, O., & Dean, J. (2015): "Distilling the Knowledge in a Neural Network", ArXiv, abs/1503.02531 discusses a way to compress the knowledge in an ensemble into a single model which is much easier to deploy by introducing a new type of ensemble composed of one or more full models and many specialist models which learn to distinguish fine-grained classes that the full models confuse;
Romero, A., Ballas, N., Kahou, S.E., Chassang, A., Gatta, C., & Bengio, Y. (2014): "FitNets: Hints for Thin Deep Nets", CoRR, abs/1412.6550 discusses knowledge distillation to allow the training of a student node that is deeper and thinner than the teacher node, using the intermediate representations learned by the teacher as hints to improve the training process and final performance of the student node;
Yim, J., Joo, D., Bae, J., & Kim, J. (2017): "A Gift from Knowledge Distillation: Fast Optimization, Network Minimization and Transfer Learning", 2017 IEEE Conference on Computer Vision and Pattern Recognition (CVPR), 7130-7138 disusses a novel technique for knowledge transfer, where knowledge from a pretrained deep neural network (DNN) is distilled and transferred to another DNN, which shows the student DNN that learns the distilled knowledge is optimized much faster than the original model and outperforms the original DNN.

Existing solutions present one or more of the following drawbacks:

poor performance and automation;
limited ability to adapt to different complex backbones, in particular for embedded solutions, and
reduced distillation capability for large models.

Object and summary

An object of one or more embodiments is to contribute in overcoming the aforementioned drawbacks.
According to one or more embodiments, that object can be achieved via a method having the features set forth in the claims that follow.
A computer-implemented method may be exemplary of such a method.
One or more embodiments may relate to a corresponding processing device.
One or more embodiments may include a computer program product loadable in the memory of at least one processing circuit (e.g., a computer) and including software code portions for executing the steps of the method when the product is run on at least one processing circuit. As used herein, reference to such a computer program product is understood as being equivalent to reference to a computer-readable medium containing instructions for controlling the processing system in order to co-ordinate implementation of the method according to one or more embodiments. Reference to "at least one computer" is intended to highlight the possibility for one or more embodiments to be implemented in modular and/or distributed form.
The claims are an integral part of the technical teaching provided herein with reference to the embodiments.
One or more embodiments facilitate deploying complex machine leaning methods on-board relatively simple devices such as microcontrollers.
One or more embodiments may be deployed on a set of microcontrollers arranged in a federated configuration.
One or more embodiments may exploit the addition of a neuron-tag with embedded crypto-code.

Brief description of the several views of the drawings

One or more embodiments will now be described, by way of nonlimiting example only, with reference to the annexed Figures, wherein:

Figure 1 is a diagram exemplary of a deep neural network, DNN topology;
Figure 2 is a diagram exemplary of a first phase of a method as per the present disclosure;
Figure 3 is a diagram exemplary of a second phase of a method as per the present disclosure;
Figure 4 is a diagram exemplary of a signal processing pipeline as per the present disclosure;
Figures 5 and 6 are diagrams exemplary of a performance benchmark of one or more embodiments,
Figures 7 and 8 are diagrams exemplary of an alternative performance benchmark of one or more embodiments, and
Figure 9 is a diagram exemplary of a processing device as per the present disclosure.

Corresponding numerals and symbols in the different figures generally refer to corresponding parts unless otherwise indicated.
The figures are drawn to clearly illustrate the relevant aspects of the embodiments and are not necessarily drawn to scale.
The edges of features drawn in the figures do not necessarily indicate the termination of the extent of the feature.

Detailed description

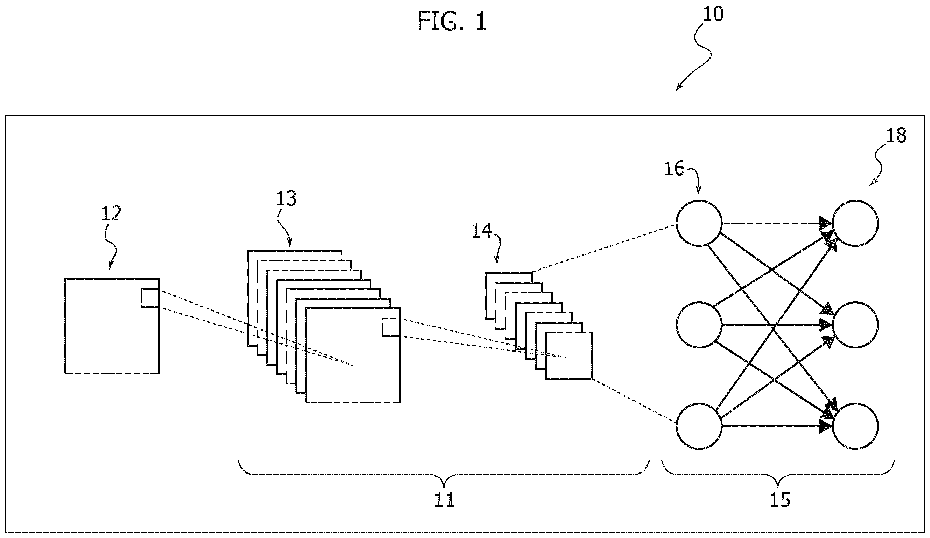

In the ensuing description, one or more specific details are illustrated, aimed at providing an in-depth understanding of examples of embodiments of this description. The embodiments may be obtained without one or more of the specific details, or with other methods, components, materials, etc. In other cases, known structures, materials, or operations are not illustrated or described in detail so that certain aspects of embodiments will not be obscured.
Reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment" that may be present in one or more points of the present description do not necessarily refer to one and the same embodiment.
Moreover, particular conformations, structures, or characteristics may be combined in any adequate way in one or more embodiments.
As used herein, the term "or" is an inclusive "or" operator, and is equivalent to the phrases "A or B, or both" or "A or B or C, or any combination thereof," and lists with additional elements are similarly treated. The term "based on" is not exclusive and allows for being based on additional features, functions, aspects, or limitations not described, unless the context indicates otherwise. In addition, throughout the specification, the meaning of "a," "an," and "the" include singular and plural references.
The references used herein are provided merely for convenience and hence do not define the extent of protection or the scope of the embodiments.
For the sake of simplicity, in the following detailed description a same reference symbol may be used to designate both a node/line in a circuit and a signal which may occur at that node or line.
The terms "processing device" may be used interchangeably in the following to refer to a "processing system" and is intended to denote a computing device/system apt to process data signals.
The term "dataset" may be used in the following to refer to a collection of signals of homogeneous or heterogeneous kind which may be stored in at least one data storage unit (or memory), such as a database accessible via an Internet connection.
A wide variety of technical domains (such as computer vision, speech recognition, and/or signal processing applications, for instance) may benefit from the use of artificial neural network ANN, processing methods which may quickly apply hundreds, thousands, or even millions of concurrent processing operations to data signals. ANN methods, as discussed in this disclosure, may fall under the technological titles of learning/inference machines, machine learning, artificial intelligence, artificial neural networks, probabilistic inference engines, backbones, and the like.
Such learning/inference machines may have an underlying topology or architecture currently referred to as deep convolutional neural networks (DCNN).
A DCNN is a computer-based tool that applies data processing to large amounts of data and, by conflating proximally related features within the data, adaptively "learns" to perform pattern recognition on the data, thereby making broad predictions and refining the predictions based on reliable conclusions and new conflations.
For instance, a convolutional neural network (CNN) is a kind of DCNN.
As exemplified in Figure 1, a CNN pipeline 100 comprises a plurality of "layers" 12, 13, 14, 16, 18 and different types of data processing operations are made at each layer, such as feature extraction 11 and/or classification 15.

The most used types of layers are convolutional layers 13, fully connected or dense layers 16, and pooling layers 14 (max pooling, average pooling, etc.). Data exchanged between layers are called features.

As appreciable to those of skill in the art, each layer of the CNN 10 comprises a plurality of computing units currently denoted as perceptrons whose description is performed via a tuple of parameters. Such parameters may comprise, for instance:

a set of learnable parameters typically referred to as weights W, and
other parameters P such as activation function type, padding, stride, and so on, depending on the type of ANN processing layer.

The processing layers that are configured to apply ANN procesing (e.g., convolution) to the input data provided at an input layer, thereby providing the processed data at an output layer, are currently referred to as "hidden layers".

CNNs are particularly suitable for recognition tasks, such as recognition of numbers or objects in images, and may provide highly accurate results.

As appreciable to those of skill in the art, the computations performed by a CNN, or by other neural networks, often include repetitive computations over large amounts of data. Thereby, such "large" models may be executed onto computer devices having hardware acceleration subsystems or comprising a wide network of computational and data storage resources such as those of a server.

Inventors have observed that, in order to perform similar operations to those available with large machine learning in environments with limited computational and memory resources, "large" ANN stages may teach to "smaller" ANN stages how they process the data, thereby facilitating an almost lossless compression of the machine learning model in terms of its performance.

For the sake of simplicity one or more embodiments are discussed herein mainly with reference to convolutional neural networks, CNNs, as deep neural network, DNN topology for the large or "teacher" ANN network, being otherwise understood that one or more embodiments may apply notionally to any complex ANN topology or pipeline.

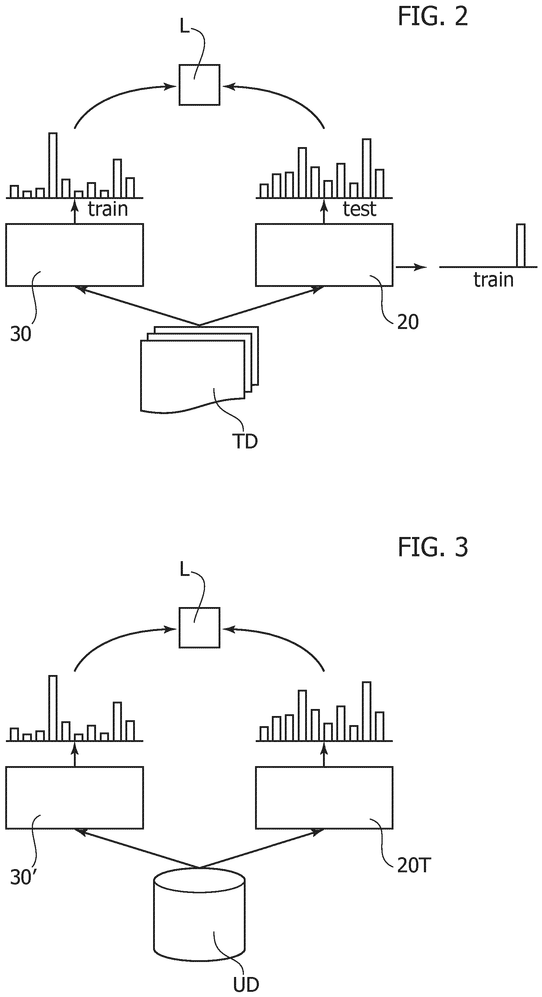

As exemplified in Figures 2 and 3, a method of reducing the computational complexity of large machine learning models comprises, in a first phase (also currently denoted as "training phase"):

providing a first "teacher" ANN module 20, such as a large CNN processing pipeline 10 having tens of layers of a wide variety of different types;
providing a second "student" ANN module 30, such as a smaller ANN with at least one order of magnitude of lower complexity;
providing a training dataset TD (e.g., a set of labeled images) comprising calibration data for which the ground-truth is known;
train the teacher ANN module 20 to perform artificial neural network (ANN) processing (e.g., classify the images in the training dataset) and, at a same time, training the student ANN module 30 to perform the same operation of the teacher by using a composite loss function that takes into account the performance of both ANN processing pipelines 20, 30 in reducing the error with respect to the known classification.

Using the method exemplified in Figure 2 it is possible to obtain a trained teacher ANN module 20T whose weight values are fixed and a partially trained student ANN module 30' that has weight values based on the "observation" of the learning process of the teacher ANN module 20.

As exemplified in Figure 3, the method of "knowledge distillation" for complexity reduction of ANN processing comprises, in a second phase (also currently denoted as "inference phase"):

providing a further dataset UD (also currently denoted as "unlabeled dataset") for which the ground-truth is not available a priori,
applying ANN processing on the unlabeled dataset UD using both the trained teacher ANN module 20T and the partially trained student ANN module 30',
minimizing the loss function of the student by reducing the error in the output provided by the student ANN module 30' with respect to that provided by the trained teacher ANN module 20T.

An operation of training exemplified in Figures 2 and 3 comprises minimizing at least one loss function LOSS based on a mean square error (MSE) between the logits z of the teacher 20 and of the student 30.

For instance, the loss function L that can be expressed as:

$$L_{(z^s(\tau), z^t(\tau))} = \|z^{s(\tau)} - z^t(\tau)\|_2^2$$

where

$z^{s(\tau)}$ represents the logits of the teacher ANN module 20;
$z^{T(\tau)}$ represents the logits of the student ANN module 30.

The logit function Z is mathematically defined as the logarithm of the odds of the probability $p$ of a certain event occurring, which may be expressed as:

$$Z(p) \ = \ log(p \ / \ (1 \ - \ p))$$

where $p$ represents the probability of the event, and *log* denotes the natural logarithm.

As exemplified herein, the logit function Z serves as a link function to map probabilities (ranging between 0 and 1) to real numbers, which can then be used to express linear relationships.

In one or more embodiments known ANN processing pipelines are suitable for used as teacher ANN module 20, 20T such as those discussed in documents:

Bellitto, G., Proietto Salanitri, F., Palazzo, S. et al.: "Hierarchical Domain-Adapted Feature Learning for Video Saliency Prediction", Int J Comput Vis 129, 3216-3232 (2021), doi: 10.1007/s11263-021-01519-y;

"An Image is Worth 16×16 Words: Transformers for Image Recognition at Scale", ArXiv (2020), abs/2010.11929.

For instance, the teacher ANN module comprises either a CNN processing stage or a transformer network processing stage.

For instance, one of these computer program products may use 100GB of RAM and thanks to the method as per the present disclosure it is possible to train a student ANN module that can reproduce its performance on a processing device limited to 4 MB of data storage space.

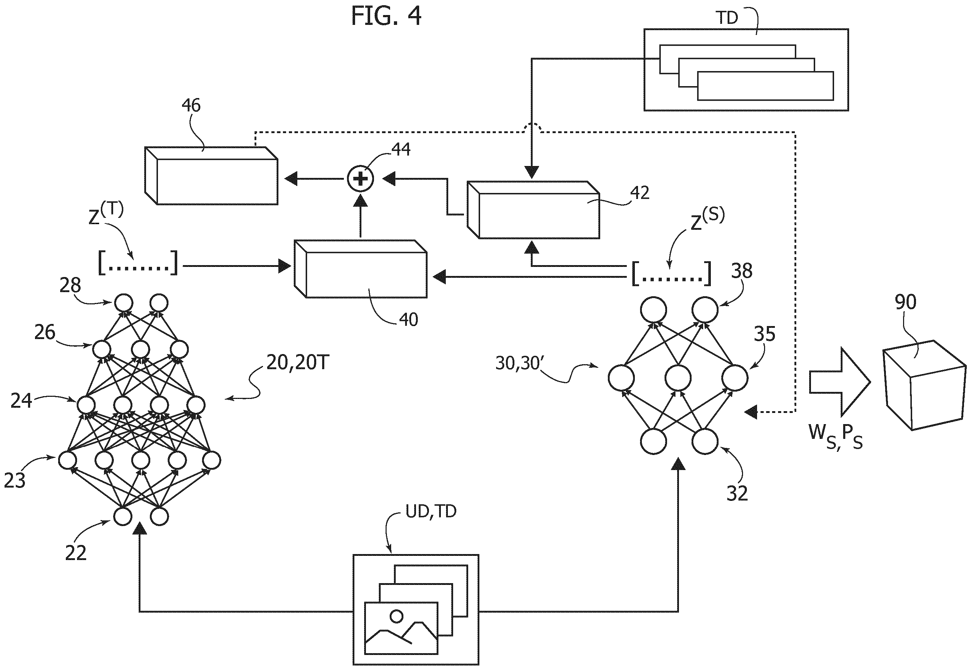

Figure 4 is a diagram exemplary of a "knowledge distillation" pipeline as per the present disclosure which can be used for the first phase exemplified in Figures 2 and/or for the second phase exemplified in Figure 3 of the method as per the present disclosure.

As exemplified in Figure 4, for instance:

the teacher ANN module 20T comprises a plurality of ANN processing layers 22, 23, 24, 26, 28 comprising an input layer 22, a convolutional layer 23, a pooling layer 24, a fully connected layer 26 and an output layer 28, and
the student ANN module 30 comprises an input layer 32, a generic hidden layer 35 and an output layer 38.

Therefore, the topology of the student ANN module 30, 30' is appreciably simpler (e.g., three times smaller in the example of Figure 4) than the structure of the teacher ANN module 20, 20T.

Such a configuration of the teacher and student ANN modules 20, 20T, 30, 30' is illustrated for the sake of simplicity, being otherwise understood that such configurations are purely exemplary and in no way limiting.

In one or more embodiments, the topology of the student ANN module 30, 30' may be designed taking into account the processing capabilities of edge devices (e.g., microcontroller devices) in a heuristic manner, for instance in order to take find a tradeoff between application and computing performance.

As exemplified in Figure 4, the unlabeled dataset UD comprises a set of images. Again, such a kind of training data is illustrated in Figure 4 purely for the sake of simplicity, being otherwise understood that notionally any kind of unlabeled data may be used to perform the knowledge distillation as exemplified herein.

In one or more embodiments known datasets may advantageously be used such as Cifar-100 and/or ImageNette publicly available datasets. The Canadian Institute For Advanced Research, CIFAR-100 dataset is a collection of images that are commonly used to train machine learning and computer vision algorithms. ImageNette is a subset of ten "easily" classified classes from the ImageNette dataset. It was originally prepared by Jeremy Howard of FastAI.

As exemplified in Figure 4:

the images of the dataset TD, UD are processed by the networks of the teacher 20, 20T and the student 30, 30';
comparing of the output data of the teacher ANN module 20, 20T and of the student ANN module 30, 30';
computing a distillation loss $L_D$ based on the output data of the teacher ANN module 20, 20T and of the student ANN module 30, 30' (block 40 in Figure 4);
based on the output data of the student ANN module 30, 30', computing a classification loss $L_{CE}$ for the student ANN module 30, 30' (block 42 in Figure 4);

computing a total loss L based on the distillation loss $L_D$ and the classification loss $L_{CE}$ (block 44 in Figure 4); and back propagating the computed total loss value L to the student ANN module 30, 30' (preferably also to the teacher ANN module 20) and adjusting the parameters (such as weights Ws of the layers and/or other parameters Ps) of the student ANN module 30, 30' until reaching a relative minimum for the total loss value L.

In one or more embodiments it may be possible to select among different metric functions to measure the loss functions used in the pipeline exemplified in Figure 4.

As exemplified in Figure 4, the classification loss LCE may be expressed as:

$$\mathcal{L}_{CE(p^S(\tau),y)} = \sum_j -y_j j \, \log p^S_j(\tau)$$

where

$p_j$ is the probability distribution of the logit errors,
$y_j$ is the target label to assign,
$\tau$ is a time variable.

For instance, a KLD or a MSE function may be used for the distillation loss function LD.

For instance, using a KLD function the distillation function may be expressed as

$$\mathcal{L}_{KL(p^S(\tau),pt(\tau))} = \tau^2 \sum_j p^t_j(\tau) \log \frac{p^t_j(\tau)}{p^s_j(\tau)}$$

where

$p_j$ is the probability distribution of the logit errors,
$y_j$ is the target label to assign,
$\tau$ is a time variable.

For instance, the probability distributions of the logits z may be computed using a softmax function, which may be expressed as:

$$p_k^S(\tau) = \frac{\exp(\frac{z_k}{\tau})}{\sum_{j=1}^k \exp\left(\frac{z_j}{\tau}\right)^s}$$

$$p_k^t(\tau) = \frac{\exp(\frac{z_k}{\tau})}{\sum_{j=1}^k \exp\left(\frac{z_j}{\tau}\right)^t}$$

where
$z_k$ represents the k-th logit or error value indicative of a difference between the ground-truth table and the label assigned by the respective processing stage.

For instance, block 44 of Figure 4 may be configured to compute the total loss L as:

$$\mathcal{L} = (1-\alpha) \cdot \mathcal{L}_{CE(p^S(\tau),y)} + \alpha \cdot \mathcal{L}_{D(p^S(\tau),pt(\tau))^\tau)}$$

where
$\alpha$ is a value in the range [0, 1], preferably closer to the upper value (one) of the range so as to better propagate to the student ANN module 30.

As exemplified in Figure 4, once the loss function is minimized, the student ANN module parameters (such as weight values Ws or other parameters Ps) can be provided to the edge device 90 for storage thereof and for their retrieval during ANN processing on the platform 90.

As exemplified herein, a "teacher" network 20, 20T, pre-trained on large dataset, is used as a guidance to develop a compressed network 30, 30' onto which the operational functions of the teacher ANN module 20, 20' are transferred without replicating the same computational complexity.

The compressed model 30, 30' has a reduced number of ANN parameters and/or a simpler topology compared with the "teacher", thereby resulting compatible with edge devices equipped with limited processing capabilitied. For instance, STM32 cube devices may be equipped with the compressed model 30, 30' in order to perform compressed ANN processing.

One or more embodiments use a total loss function L comprising a weighed sum of a first loss function $L_{CE}$ of the student 30, 30' and a distillation loss function $L_D$ based on the comparison of the results of the student 30, 30' with respect to the teacher 20, 20T. For instance, the total loss L may be expressed as: $L = (1 - \alpha) \cdot \mathcal{L}_{CE} + \alpha \cdot \mathcal{L}_D$ where $\alpha$ is a parameter in the range [0, 1].

For instance, a Kullback-Leibler divergence or Mean Square Error can be used as distillation loss $L_D$.

As exemplified in Figure 4, a method as per the present disclosure comprises:

providing a first artificial neural network, ANN processing stage 20, 20T comprising a first set of ANN processing layers 22, 23, 24, 26, 28, and
providing a second ANN processing stage 30, 30' comprising a second set of ANN processing layers 32, 35, 38 having a set of processing layer parameters Ws, Ps comprising at least one set of ANN processing weights $W_s$.

As exemplified herein, the number of processing layers in the first set of ANN processing layers is greater than the number of processing layers in the second set of ANN processing layers,

As exemplified in Figure 4, the method further comprises:

applying first ANN processing to at least one input dataset TD; UD via the first ANN processing stage 20T, producing a first set of output values $z^{(T)}$ as a result;
applying second ANN processing to said at least one input dataset via the second ANN processing stage 30', producing a second set of output values $z^{(S)}$ as a result;
computing 40 a first loss value $L_D$ based on the first set of output values and on the second set of output values;
computing 42 a second loss value $L_{CE}$ based on the second set of output values;
computing 44 a total loss L based on the first loss value $L_D$ and of the second loss value $L_{CE}$, and
adjusting 46 the values of the processing layer parameters in the set of processing layer parameters Ws, Ps (comprising at least one set of weight values Ws) of the second ANN processing stage 30' based on the total loss value.

As exemplified in Figure 4, the method further comprises:

applying normalization processing to the first set of output values $z^{(T)}$ provided by the first ANN processing stage, resulting in a first set of probability values;
applying normalization processing to the second set of output values ($z^{(S)}$) provided by the second ANN processing stage, resulting in a second set of probability values;
computing 40 the first loss value based on the first set of probability values and on the second set of probability values, and
based on the second set of probability values, computing 42 the second loss value.

For instance, applying normalization processing as exemplified in Figure 4 comprises applying a softmax function to the respective set of output values.

As exemplified in Figure 4, computing 40 the first loss value comprises computing either a mean square error, MSE of the first set of output values ($z^{(T)}$) and the second set of output values or a Kullback-Leibler divergence, KLDiv of the first set of output values and the second set of output values.

As exemplified in Figure 4, computing 44 the total loss based on the first loss value and on the second loss value comprises computing a linear combination of the first loss value and of the second loss value.

For instance, the total loss L is expressed as:

$$L = (1 - \alpha) \cdot L_{CE} + \alpha \cdot L_D$$

where

$\alpha$ is a parameter in a range of values 0 to 1, preferably in a range of values 0.5 to 0.9;
$L_{CE}$ is the first loss value, and
$L_D$ is the second loss value.

As exemplified in Figure 4, providing the first artificial neural network, ANN processing stage comprises providing a convolutional neural network, CNN processing stage or a transformer network processing stage.

As exemplified in Figure 4, the quantity or number of processing layers in the first set of ANN processing layers (22, 23, 24, 26, 28) is at least three times greater than the respective quantity or number of processing layers in the second set of ANN processing layers (32, 35, 38).

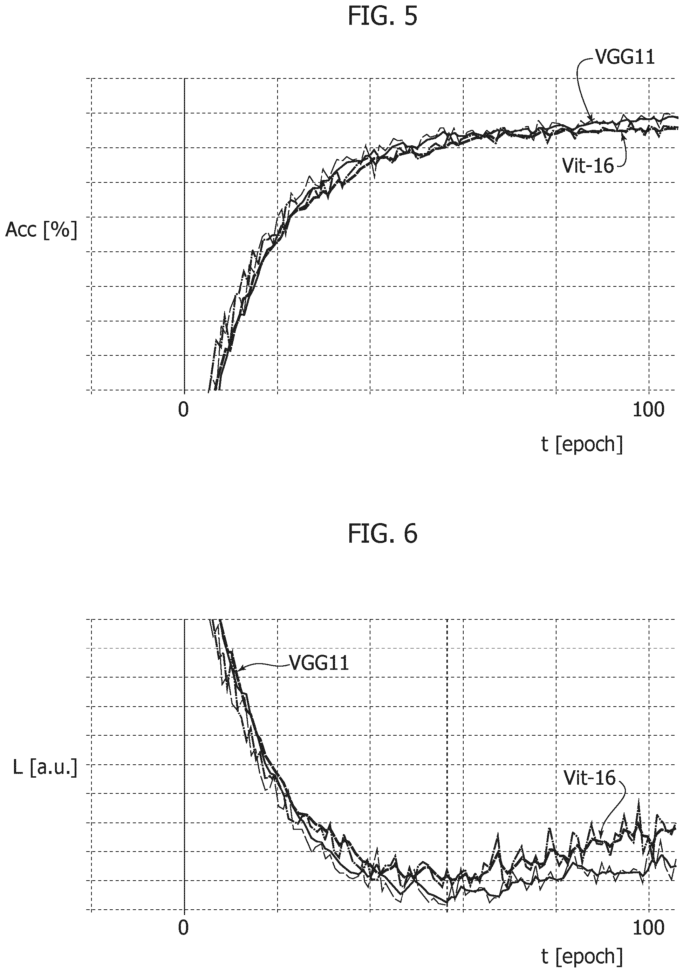

Figures 5 to 8 are diagrams exemplary of a performance of the student 30, 30' with respect to the teacher 20, 20T on a same data-set for different datasets and teacher/student ANN module topologies.

Figures 5 and 6 relate to the benchmark of a student ANN module VGG11 comprising a CNN comprising a first plurality (about 107 million) of parameters and a teacher ANN module Vision Transformer (ViT)-16 comprising a second plurality (about 307 million, about three times the first plurality, for instance) of parameters.

As exemplified in Figures 5 and 6, both the student VGG11 and the teacher ViT-16 receive as input data TD, UD the ImageNette dataset comprising a number N=10 of classes.

Figure 5 is a plot of the evolution over time (absissa scale, in epoch units) of the accuracy (ordinate scale, in percentage units) of the student ANN module VGG11 and the teacher ANN module ViT-16 in the ImageNette scenario.

Figure 6 is a plot of the evolution over time (abscissa scale, in epoch units) of the loss function L (ordinate scale, in percentage units) of the student ANN module VGG11 and the teacher ANN module ViT-16 in the ImageNette scenario.

As exemplified in Figures 5 and 6, in the ImageNette scenario the student model VGG11 reaches an accuracy about 77% which can be increased up to 79.65% in case the KLDiv expression is used to compute the distillation loss $L_D$.

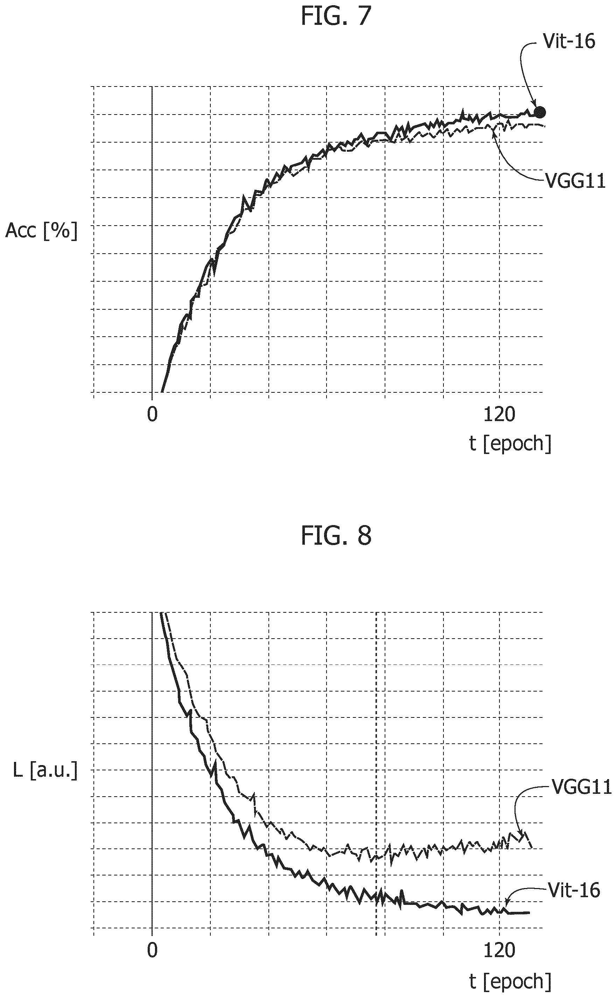

Figures 7 and 8 relate to the benchmark of a student ANN module VGG11 comprising a CNN comprising a first plurality (about 107 million) of parameters and a teacher ANN module Vision Transformer (ViT)-16 comprising a second plurality (about 307 million, about three times the first plurality, for instance) of parameters.

As exemplified in Figures 7 and 8, both the student VGG11 and the teacher ViT-16 receive as input data TD, UD the CIFAR100 having a number N=100 of classes.

Figure 7 is a plot of the evolution over time (abscissa scale, in epoch units) of the accuracy (ordinate scale, in percentage units) of the student ANN module VGG11 and the teacher ANN module ViT-16 in the CIFAR100 scenario.

Figure 6 is a plot of the evolution over time (abscissa scale, in epoch units) of the loss function L (ordinate scale, in percentage units) of the student ANN module VGG11 and the teacher ANN module ViT-16 in the CIFAR100 scenario.

As exemplified in Figures 7 and 8, in the CIFAR100 scenario the student model VGG11 reaches an accuracy about 62% which can be increased up to almost 65% in case the KLDiv expression is used to compute the distillation loss $L_D$.

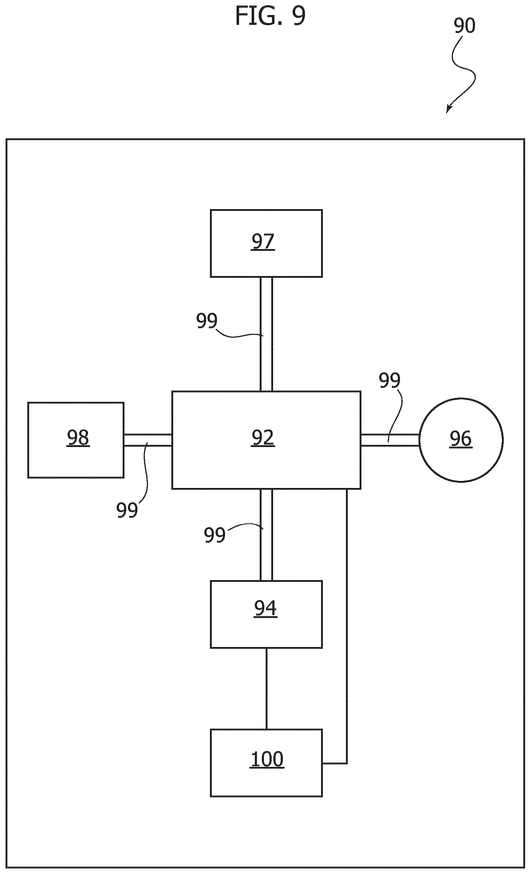

Figure 9 is a block diagram of a processing device or system 90 suitable to execute instructions of the student ANN module 30, 30'.

As exemplified in Figure 9, the system 90 comprises:

one or more processing cores or circuits 92 configured to control overall operation of the system 90, execution of application programs by the system 90 (e.g., programs which classify images using CNNs), etc.;
one or more memories 94, such as one or more volatile and/or nonvolatile memories which may store, for example, all or part of instructions and data related to control of the system 90, applications and operations performed by the system 90, etc.; for instance, weight values Ws and ANN parameters Ps for the student ANN module 30, 30' may be stored in the memory 94 of the system 90;
one or more sensors 96 (*e.g.,* image sensors, audio sensors, accelerometers, pressure sensors, temperature sensors, etc.);
one or more interfaces 97 (*e.g.,* wireless communication interfaces, wired communication interfaces, etc.), and
other circuits 98, which may include antennas, power supplies, one or more built-in self-test (briefly, BIST) circuits, etc., and a main bus system 99.

For instance, the processing cores 102 may comprise one or more processors, a state machine, a microprocessor, a programmable logic circuit, discrete circuitry, logic gates, registers, etc., and/or various combinations thereof.

For instance, one or more of the memories 94 may include a memory array, which, in operation, may be shared by one or more processes executed by the system 90.

For instance, the main bus system 99 may include one or more data, address, power and/or control buses coupled to the various components of the system 90.

As exemplified in Figure 9, preferably the system 90 also comprises one or more hardware accelerators 100 which, in operation, accelerate the performance of one or more operations associated with implementing a CNN. The hardware accelerator 100 as illustrated includes one or more convolutional accelerators to facilitate efficient performance of convolutions associated with convolutional layers of a CNN, for instance.

As exemplified herein, a computer program product comprises instructions which, when the program is executed by a computer, cause the computer to carry out the method exemplified in Figure 4.

As exemplified herein, a computer-readable medium has stored therein the values of the set of processing layer parameters Ws, Ps obtained using the method exemplified in Figure 4.

As exemplified in Figures 4 and 9, a method of operating a processing device 90 configured to perform artificial neural network, ANN processing as a function of a set of processing layer parameters Ws, Ps, comprises:

accessing 94 values of the set of processing layer parameters Ws, Ps obtained using the method exemplified in Figure 4,

performing artificial neural network, ANN processing 30, 30' as a function of the values of the set of processing layer parameters.

As exemplified herein, a computer program product comprises instructions which, when the program is executed by a processing device 90, cause the processing device to carry out ANN processing according to a method as per the present disclosure.

As exemplified herein, a computer-readable medium comprises instructions which, when executed by a processing device 90, cause the processing device to carry out ANN processing according to the method as exemplified herein.

As exemplified in Figure 9, a processing device 90 comprises memory circuitry 94 having stored therein:

an adjusted values of the set of processing layer parameters Ws, Ps obtained using the method exemplified in Figure 4, and

instructions which, when executed in the processing device, cause the processing device to:

access 94 said adjusted values of the set of processing layer parameters, and

perform ANN processing as a function of said adjusted values of the set of processing layer parameters.

For instance, the processing device comprises a microcontroller device.

It will be otherwise understood that the various individual implementing options exemplified throughout the figures accompanying this description are not necessarily intended to be adopted in the same combinations exemplified in the figures. One or more embodiments may thus adopt these (otherwise non-mandatory) options individually and/or in different combinations with respect to the combination exemplified in the accompanying figures.

Without prejudice to the underlying principles, the details and embodiments may vary, even significantly, with respect to what has been described by way of example only, without departing from the extent of protection. The extent of protection is defined by the annexed claims.

**Claims**

1. A method, comprising:

providing a first artificial neural network, ANN processing stage (20, 20T) comprising a first set of ANN processing layers (22, 23, 24, 26, 28), and

providing a second ANN processing stage (30, 30') comprising a second set of ANN processing layers (32, 35, 38) having a set of processing layer parameters (Ws, Ps) comprising at least one set of ANN processing weights ($W_s$), wherein the number of processing layers in the first set of ANN processing layers (22, 23, 24, 26, 28) is greater than the number of processing layers in the second set of ANN processing layers (32, 35, 38),

the method further comprising:

applying first ANN processing to at least one input dataset (TD; UD) via the first ANN processing stage (20; 20T), producing a first set of output values ($z^{(T)}$) as a result;

applying second ANN processing to said at least one input dataset (TD; UD) via the second ANN processing stage (30; 30'), producing a second set of output values as a result ($z^{(S)}$);

computing (40) a first loss value ($L_D$) based on the first set of output values ($z^{(T)}$) and on the second set of output values ($z^{(S)}$);

computing (42) a second loss value ($L_{CE}$) based on the second set of output values ($z^{(S)}$);

computing (44) a total loss (L) based on the first loss value ($L_D$) and of the second loss value ($L_{CE}$), and
adjusting (46) the values of the processing layer parameters in the set of processing layer parameters (Ws, Ps) of the second ANN processing stage (30, 30') based on the total loss value (L).

2. The method of claim 1, comprising:

applying normalization processing to the first set of output values ($z^{(T)}$) provided by the first ANN processing stage (20, 20T), providing a first set of probability values as a result;
applying normalization processing to the second set of output values ($z^{(S)}$) provided by the second ANN processing stage (30, 30'), providing a second set of probability values as a result;
computing (40) said first loss value ($L_D$) based on the first set of probability values and on the second set of probability values ($z^{(S)}$), and
based on the second set of probability values, computing (42) said second loss value ($L_{CE}$).

3. The method of claim 2, wherein applying normalization processing comprises applying a softmax function to the respective set of output values.

4. The method of any one of the preceding claims, wherein computing (40) said first loss value ($L_D$) comprises computing:

a mean square error, MSE of the first set of output values ($z^{(T)}$) and the second set of output values ($z^{(S)}$), or
a Kullback-Leibler divergence, KLDiv of the first set of output values ($z^{(T)}$) and the second set of output values ($z^{(S)}$).

5. The method of any one of the preceding claims, wherein computing (44) the total loss (L) comprises computing (44) a linear combination of said first loss value ($L_D$) and of said second loss value ($L_{CE}$).

6. The method of claim 5, wherein said total loss L is expressed as:

$$L = (1 - \alpha) \cdot L_{CE} + \alpha \cdot L_D$$

where

$\alpha$ is a parameter in a range of values 0 to 1, preferably in a range of values 0.5 to 0.9;
$L_{CE}$ is the first loss value, and
$L_D$ is the second loss value.

7. The method of any one of the preceding claims, wherein providing said first artificial neural network, ANN processing stage (20, 20T) comprises providing:

a convolutional neural network, CNN processing stage, or
a transformer network processing stage.

8. The method of any one of the preceding claims, wherein the number of processing layers in the first set of ANN processing layers (22, 23, 24, 26, 28) is at least three times greater than the number of processing layers in the second set of ANN processing layers (32, 35, 38).

9. A computer program product comprising instructions which, when the program is executed by a computer, cause the computer to carry out the method of any of claims 1 to 8.

10. A computer-readable medium having stored therein said values of said set of processing layer parameters (Ws, Ps) obtained using the method of any of claims 1 to 8.

11. A method of operating a processing device (90) configured to perform artificial neural network, ANN processing as a function of a set of processing layer parameters (Ws, Ps), wherein the method comprises:

accessing (94) values of the set of processing layer parameters (Ws, Ps) obtained using the method of any of claims 1 to 8, and
performing artificial neural network, ANN processing (30, 30') as a function of said values of the set of processing layer parameters (Ws, Ps).

12. A computer program product comprising instructions which, when the program is executed by a processing device (90), cause the processing device (90) to carry out the method of claim 11.

13. A computer-readable medium comprising instructions which, when executed by a processing device (90), cause the processing device (90) to carry out the method of claim 11.

14. A processing device (90) comprising memory circuitry (94) having stored therein:

adjusted values of the set of processing layer parameters (Ws, Ps) obtained using the method of any of claims 1 to 8, and
instructions which, when executed in the processing device (90), cause the processing device (90) to:

access said adjusted values of the set of processing layer parameters (Ws, Ps), and
perform ANN processing (30, 30') as a function of said adjusted values of the set of processing layer parameters (Ws, Ps).

15. The processing device (90) of claim 14, comprising a microcontroller device.

FIG. 1

FIG. 2

FIG. 3

FIG. 4

# FIG. 5

# FIG. 6

## FIG. 7

## FIG. 8

FIG. 9

Europäisches
Patentamt

European
Patent Office

Office européen
des brevets

# EUROPEAN SEARCH REPORT

**Application Number**

EP 24 22 3509

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "Knowledge Distillation Tutorial - PyTorch Tutorials 2.1.1+cu121 documentation", ,<br>27 November 2023 (2023-11-27), pages 1-15, XP093187038,<br>Retrieved from the Internet:<br>URL:https://web.archive.org/web/2023112716 1908/https://pytorch.org/tutorials/beginne r/knowledge_distillation_tutorial.html<br>* the whole document * | 1-15 | INV.<br>G06N3/096 |
| A | JIANPING GOU ET AL: "Knowledge Distillation: A Survey",<br>ARXIV.ORG, CORNELL UNIVERSITY LIBRARY, 201 OLIN LIBRARY CORNELL UNIVERSITY ITHACA, NY 14853,<br>26 January 2021 (2021-01-26), XP081865462,<br>* Sections 2, 4, and 5 * | 1-15 | |

-----

-----

**TECHNICAL FIELDS SEARCHED (IPC)**

G06N

The present search report has been drawn up for all claims

| Place of search | Date of completion of the search | Examiner |
|---|---|---|
| The Hague | 16 May 2025 | Mariani, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HINTON, G.E.** ; **VINYALS, O.** ; **DEAN, J.** Distilling the Knowledge in a Neural Network. *ArXiv, abs/1503.02531*, 2015
- **ROMERO, A.** ; **BALLAS, N.** ; **KAHOU, S.E.** ; **CHASSANG, A.** ; **GATTA, C** ; **BENGIO, Y.** FitNets: Hints for Thin Deep Nets. *CoRR, abs/1412.6550*, 2014
- **YIM, J.** ; **JOO, D.** ; **BAE, J.** ; **KIM, J.** A Gift from Knowledge Distillation: Fast Optimization, Network Minimization and Transfer Learning. *2017 IEEE Conference on Computer Vision and Pattern Recognition (CVPR)*, 2017, 7130-7138

- **BELLITTO, G.** ; **PROIETTO SALANITRI, F.** ; **PALAZZO, S. et al.** Hierarchical Domain-Adapted Feature Learning for Video Saliency Prediction. *Int J Comput Vis*, 2021, vol. 129, 3216-3232
- An Image is Worth 16×16 Words: Transformers for Image Recognition at Scale. *ArXiv (2020), abs/2010.11929*